(19) Europäisches Patentamt
European Patent Office
Office européen des brevets

(11) EP 2 369 755 A2

(12) **EUROPEAN PATENT APPLICATION**

(43) Date of publication:
28.09.2011 Bulletin 2011/39

(51) Int Cl.:
$H04B\ 1/719^{(2011.01)}$

(21) Application number: 10172777.4

(22) Date of filing: 13.08.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

(30) Priority: 23.03.2010 TW 099108609

(71) Applicant: **Acer Incorporated**
**Taipei County (TW)**

(72) Inventor: **Huang, Po-Yao**
**Kaohsiung City 807 (TW)**

(74) Representative: **advotec.**
**Patent- und Rechtsanwälte**
**Widenmayerstrasse 4**
**80538 München (DE)**

(54) **Method of multichannel media access control**

(57) The present invention discloses a method of multichannel media access control of a cognitive radio, wherein a plurality of primary systems and a plurality of cognitive radio devices perform transmitting control and data transmitting in a plurality of channels. Any one of the channels is occupied by any one of the primary system with priority when the primary system wants to perform the transmitting control and data transmitting, and the cognitive radio devices get the channels occupied via a spectrum sensing then choose an idle channel dynamically to eliminate / avoid the communication collision in the channels. Thus the data to be transmitted by the cognitive radio devices could be sent to the backbone networks through the idle channels, and the channel using efficiency of the networks is improved.

FIG. 1

## Description

Field

The exemplary embodiment(s) of the present invention relates to a field of a method of multichannel media access control. More specifically, the exemplary embodiment(s) of the present invention relates to a method of multichannel media access control for cognitive radios.

Background

In 1999, the concept of cognitive radio (CR) was proposed by Joseph Mitola based on the Software Defined Radio (SDR). The basic form of the cognitive radios comprises an intelligent wireless communication technology of software-defined radio, wherein the software-defined radio is applied to the spread spectrum communication. The utilization of the RF spectrum is raised by the cognitive radios without disturbing the other users.

Further, cognitive radio is a wireless communication technology comprises an intelligent transceiver, and the transceiver can detect which of the communication channels are in used and which are not. When the unoccupied communication channels are detected, the cognitive radio system could temporarily take advantage of those bands to perform the communication. The other functions of the cognitive radio include the abilities of determining the location of the transceiver; conforming and authorizing its users; encoding or decoding signals; detecting the operating wireless apparatuses around; adjusting the output power and modulation characteristics.

The adjusting of transmitter is defined by a computer, and the receiver gets back the information signal by using a computer. The spread spectrum is a kind of wireless communication, the frequency of signal transmitted varies arbitrarily according to the mathematics time field function. In order to intercept the signals, the receiver has to use this function to adjust the frequency accurately. In addition, the intelligent transceiver having the sensing ability could continuously monitor the wider band of the spectrum in the multidimensional space of time field, frequency field and the airspace field. Even the sensing apparatus that does not get the admission to use the frequency may use the band to perform the communication if some specific unoccupied band is found in the time field or the airspace field. The whole process could be indicated as a "monitoring-sensing-adjusting" circle. In other words, the intelligence transceiver could sense the environment characteristics of the surroundings, and then adjust the parameters of transmitting and receiving automatically. Besides, the cognitive radio technology has to instantaneously monitor the wider spectrum to find the spectrum holes (the spectrums unoccupied by the primary users). In order not to disturb the primary users, the sensing users need to fast detect the primary user's reappearance to spare a spectrum for the primary user.

Else, the Cognitive Radio Network (CRN) could integrate different communication systems, such as a cellular network, a WLAN and a PAN, and provide a communication service at anytime and anywhere according to the user's location, moving condition and needs of transmission velocity and quality by the complementary communication characteristics of the aforementioned communication systems, so as to raise the communication efficiency without any dead spaces.

However, in the cognitive radio field, there were many people made efforts to raise the communication efficiency, but there are still lots of imperfections, problems and challenges in the multichannel media access protocol. In the present cognitive radio technology, the cognitive radio has to eliminate or avoid the collision by the secondary user and the primary system by a dedicated control channel, but lacks of a comprehensive consideration mechanism to avoid or eliminate these collisions and choose channels appropriately. The more serious problem is the dynamic channel access problem due to the integration of different communication systems in the cognitive radio. If the cognitive radio apparatus is not the same communication system with the primary system, the problems need to be solved by the multichannel MAC protocol are not only the access competitions between the cognitive radio apparatuses in the same communication system, but also the access competitions between the cognitive radio apparatuses in the different communication system.

Some researchers provide related solutions facing the aforesaid problems, but there are still some bottlenecks need to be broken. These multichannel MAC protocols are categorized as following:

1. Protocols with Dedicated Control Channels: keep a control channel to exchange the control messages in the multichannel existing in the multi primary system. This violates the design concept of the cognitive radio.

2. Protocols with Common Hopping: all cognitive radios follow same hopping model and exchange the control signals in a single channel selected together. This can not raise the channel using efficiency.

3. Split Phase Protocols: handle the control phase and the data phase in the same specific channel at different time. This method has the same problem as the aforesaid protocols with dedicated control channels.

4. Multiple Rendezvous Protocols: separate an independent control channel from the multichannel to perform multi-transmitting in the multichannel. This method only can by applied in single kind of radio.

In summary, the problems need to be solved in the present multichannel cognitive radio of the multi-communication system is to avoid or eliminate the collisions so as to perform the dynamic information transmitting, and further eliminate the channel access competitions between the apparatuses in the same communication system and different communication system.

Summary

In view of the aforementioned problems of the prior art, an object of the present invention is to provide a method of multichannel media access control, so as to overcome the bottlenecks of the dynamic transmitting data in multichannel.
According to the object of the present invention, a method of multichannel media access control applicable to a fully-distributed ad-hoc network is provided, and the fully-distributed ad-hoc network comprises a plurality of primary systems and a plurality of cognitive radio devices. Each primary system and cognitive radio device transmit control signals and data in a plurality of channels. When any primary system wants to perform transmitting control or data transmission, the primary system will have the priority to occupy any channels. Each cognitive radio device gets a channel occupied by any primary system or cognitive radio device via a spectrum sensing and chooses an idle channel by the contention avoidance/resolution mechanism to transmit its data to the backbone network through the idle channel.
Wherein the spectrum sensing includes a collision eliminating algorithm and a collision avoidance algorithm to eliminate and avoid collisions, so as to allow each cognitive radio device to transmit its data.
Wherein the spectrum sensing further includes a channel selecting algorithm to select one channel from the multichannel by a distributed selecting method.
As described above, the method of multichannel media access control of cognitive radio according to the present invention may have one or more of the following advantages:
(1) The cognitive radio devices could dynamically adjust the using probability of the channel via the spectrum sensing, so as to effectively decrease the collision probability between the primary system and the other cognitive radio devices and raise the using efficiency of the whole channel.
(2) The cognitive radio devices could appropriately use the idle channels unoccupied by the primary system via the spectrum sensing, so as to prevent the cognitive radio devices disturb the primary system on each channel.
(3) The cognitive radio devices could eliminate / avoid the collision in the channel, and thus ease off the channel competition between each cognitive radio device.
With these and other objects, advantages, and features of the invention that may become hereinafter apparent, the nature of the invention may be more clearly understood by reference to the detailed description of the invention, the embodiments and to the several drawings herein.

Brief description of the drawings

The exemplary embodiment(s) of the present invention will be understood more fully from the detailed description given below and from the accompanying drawings of various embodiments of the invention, which, however, should not be taken to limit the invention to the specific embodiments, but are for explanation and understanding only.

**Figure 1**    illustrates a schematic diagram that the present invention is applied to a fully-distributed ad-hoc network;

**Figure 2**    illustrates a schematic diagram of a multichannel media access frame structure according to the present invention;

**Figure 3**    is a schematic diagram illustrating the situation of data transmitting in each channel by each primary system and cognitive radio device according to the present invention;

**Figure 4A**    is a flow chart of the spectrum sensing according to the present invention;

**Figure 4B**    is another flow chart of the spectrum sensing according to the present invention;

**Figure 5**    is a schematic diagram that simulates the cognitive radio devices without using the spectrum sensing according to the present invention;

**Figure 6**    is another schematic diagram that simulates the cognitive radio devices without using the spectrum sensing according to the present invention;

**Figure 7**    is still another schematic diagram that simulates the cognitive radio devices without using the spectrum sensing according to the present invention;

**Figure 8**      is a schematic diagram that simulates the cognitive radio devices using the spectrum sensing according to the present invention;

**Figure 9**      is another schematic diagram that simulates the cognitive radio devices using the spectrum sensing according to the present invention;

**Figure 10**      is still another schematic diagram that simulates the cognitive radio devices using the spectrum sensing according to the present invention; and

**Figure 11**      is still another schematic diagram that simulates the cognitive radio devices using the spectrum sensing according to the present invention.

<u>Detailed Description</u>

Exemplary embodiments of the present invention are described herein in the context of a method of multichannel media access control.

Those of ordinary skilled in the art will realize that the following detailed description of the exemplary embodiment(s) is illustrative only and is not intended to be in any way limiting. Other embodiments will readily suggest themselves to such skilled persons having the benefit of this disclosure. Reference will now be made in detail to implementations of the exemplary embodiment(s) as illustrated in the accompanying drawings. The same reference indicators will be used throughout the drawings and the following detailed description to refer to the same or like parts.

In accordance with the embodiment(s) of the present invention, the components, process steps, and/or data structures described herein may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. Where a method comprising a series of process steps is implemented by a computer or a machine and those process steps can be stored as a series of instructions readable by the machine, they may be stored on a tangible medium such as a computer memory device (e.g., ROM (Read Only Memory), PROM (Programmable Read Only Memory), EEPROM (Electrically Erasable Programmable Read Only Memory), FLASH Memory, Jump Drive, and the like), magnetic storage medium (e.g., tape, magnetic disk drive, and the like), optical storage medium (e.g., CD-ROM, DVD-ROM, paper card and paper tape, and the like) and other known types of program memory.

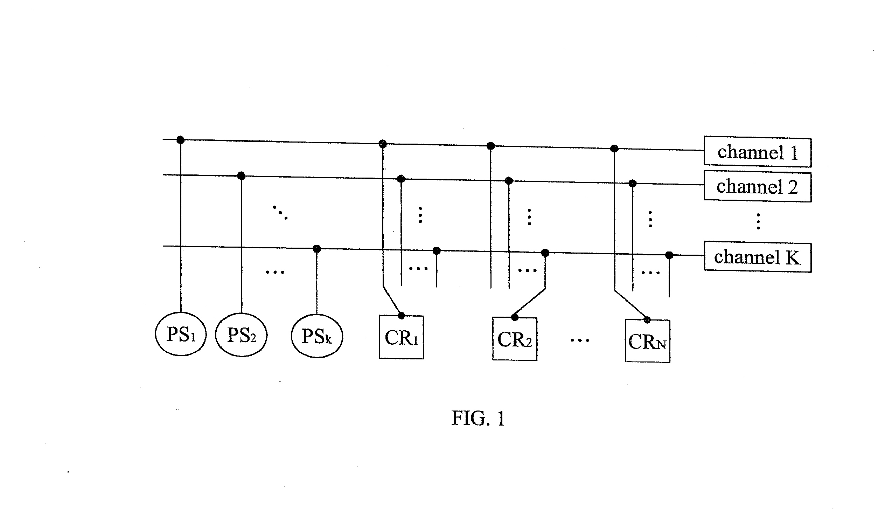

The present invention is a method of multichannel media access control for cognitive radio applicable to a fully-distributed ad-hoc network. The present invention further extends and generalizes the multichannel scenario under CRN paradigm. CRs are capable to reconfigure its physical layer to access every channel selected from the pool of multichannel where different PSs pre-occupy. Categorized as secondary users, CRs seek channel opportunities over multichannel and access the channel to relay its data to the backbone. Please refer to figure 1, which illustrates a schematic diagram that the present invention is applied to a fully-distributed ad-hoc network.

As shown in this figure, the fully-distributed ad-hoc network includes a plurality of primary systems $PS_1$, $PS_2$, $PS_3$...$PS_k$ and a plurality of cognitive radio devices $CR_1$, $CR_2$, $CR_3$...$CR_k$, and each primary system and cognitive radio device executing the transmitting control and data transmitting. When any primary system wants to perform transmitting control or data transmission, the primary system will have the priority to occupy any channels. Each cognitive radio device gets a channel occupied by any primary system or cognitive radio device via spectrum sensing and chooses an idle channel by the contention avoidance/resolution mechanism to transmit its data to the backbone network through the idle channel, so as to improve the transmitting efficiency of the networks.

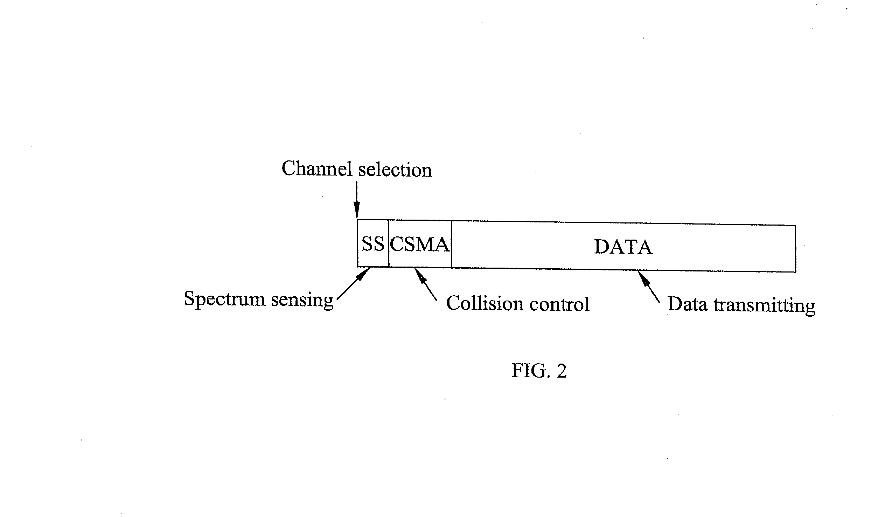

In one embodiment according to the present invention, please refer to figure 2, which illustrates a schematic diagram of a multichannel media access frame structure according to the present invention. There are two components in multichannel MAC design:

(1) Channel Selection and

(2) Contention Avoidance/Resolution

The general frame structure of the multichannel MAC is illustrated in Figure 2. At the beginning of a frame, CR selects a channel with the channel selection strategy $\Gamma$. In the frame operation, the contention avoidance/resolution consists of two parts:

(1) spectrum sensing for inter system (CR-PS) contention avoidance/resolution; and

(2) intra system (CR-CR) contention avoidance/resolution mechanism. The mathematical form of these processes can be represented by a contention avoidance/resolution function $g_k(n)$. With feasible channel selection and contention avoidance/resolution, CR proceeds reliable data transmission.

As shown in this figure, the contention avoidance/resolution mechanism includes a channel selection strategy, and the cognitive radio device follows the channel selection strategy to select a channel prepared for transmitting from the beginning duration of transmitting a frame of a packet by the cognitive radio device; after choosing the channel, the cognitive radio device starts to detect the spectrum to avoid disturbing the transmitting of the primary system; and then after eliminating / avoiding the collision, the cognitive radio device starts to transmit the packets.

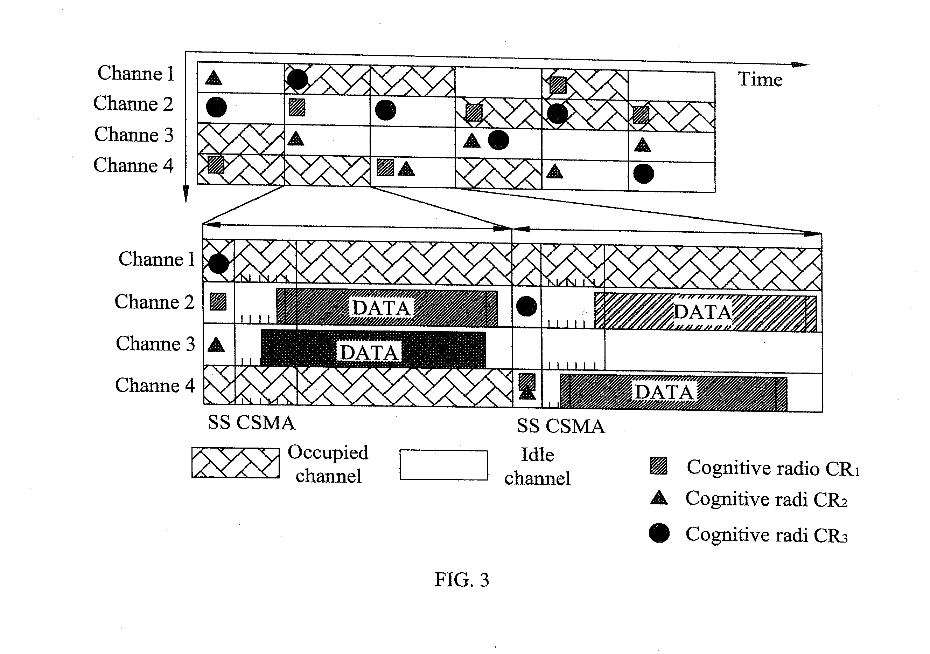

Please refer to figure 3, which is a schematic diagram illustrating the situation of data transmitting in each channel by each primary system and cognitive radio device according to the present invention. The general multichannel MAC problem is depicted in figure 3. Time is divided into small synchronized (t frame index) slots over multichannel. The duration of a slot/frame is denoted as $t_1$. The multichannel MAC is characterized by: {K, N, C, q}. K is defined as the number of multiple channels; the set {k} is used as the pool of multichannel selection. The switching of channel is supposed to take place only at slot boundary. Each channel k is supposed to be independently utilized by one licensed PS or by one CR. CR may access the channel if there is no PS appearance and vice versa. The appearance of PS on channel is modeled as an on-off Bernoulli process with parameter $q_k$. We define q = {$q_k$| k =1,2...K} as the set of probabilities of PSs' appearance over channel 1...k. The number of CRs is denoted by N. The value of N can be estimated by neighbor discovery, network initialization algorithms as in traditional study of Ad-Hoc network. Through this invention we assume this value can be correctly estimated by CR in a distributed manner with no transient behavior. Let C denote the average capacity over channels which indicates the maximum throughput per slot. Under the CR paradigm, we evaluate the performance of multichannel MAC with:

(1) the aggregated throughput R, defined as the aggregated physical layer throughput over all channels, and the

(2) average channel utilization U, defined as the average number of channels being successfully utilized for data transmission, normalized by the number of channel. Note that U is equivalent to traditional MAC "throughput" defined as the number of successful transmission per channel per slot.

As shown in this figure, the horizontal direction is time axis, the vertical direction is channel number, and every square indicates a frame. The squares with grid are the channels occupied by the primary systems, and the blank squares are idle channels. Thus, for the second and third frames of each channel, the second and third frame of channel one and the second frame of channel four are the channels occupied by the primary systems. Therefore, the cognitive radio devices could not transmit data in the second and third frame of channel one and second frame of channel four. And then each cognitive radio device detect idle channels in the second and third frame of channel two and the second frame of channel three, so the cognitive radio devices could transmit data in each frame time to avoid the collision between the cognitive radio devices and the primary systems or between different cognitive radio devices.

Furthermore, the contention avoidance/resolution mechanism includes at least the following two parts according to the present invention:

Get the situation of the channels occupied respectively by the primary systems and the cognitive radio devices, so as to eliminate and avoid the collision;

Get the situation of the channels occupied by the each cognitive radio device, so as to eliminate and avoid the collision.

As described above, the contention avoidance/resolution mechanism performs the aforesaid process via a contention avoidance/resolution algorithm to eliminate and avoid the collision, thus each cognitive radio device can transmit data reliably.

Besides, the contention avoidance/resolution algorithm further uses a spectrum sensing to mark the channels occupied or unoccupied by the primary systems, so as to resolve the competition problems between the primary systems and the cognitive radio devices. The contention avoidance/resolution algorithm further uses the spectrum sensing to mark the idle channels which can be used by each cognitive radio device, thus release the channel competition between the each cognitive radio device. The contention avoidance/resolution algorithm $g_k(n)$ is shown as the following equation:

$$g_k(n) = \mathrm{Prob}(S_k = 1 | n \ CRs \ attempt \ to \ transmit \ over \ channel k)$$

In the equation described above, $S_k$ is the idle channels that can be used by each cognitive radio device, wherein the idle channels are indicated by k.

The contention avoidance/resolution algorithm further includes two parts, one is the availability of the idle channels $\phi_k$, these idle channels are unoccupied by the primary systems; the other is solving the collision problem between each cognitive radio device; in addition, under this transmitting structure the physical layer first defines $1_k(t)$ to indicate the $k_{th}$ channel during the slot t is available for transmitting, and $1_k(t)$ could be expressed as the following equation:

$$1_k(t) = \begin{cases} 1, \text{ channel k is available at slot } t, \\ 0, \text{ otherwise.} \end{cases}$$

Furthermore, in the spectrum sensing, the alarm false probability is expressed as $P_f$ and the probability of detection is expressed as $P_d$, then the availability of the idle channels $\phi_k$ could be further defined as the following equation:
$$\phi_k = (1 - q_k)(1 - P_f^k) + q_k(1 - P_d^k)$$

If during the spectrum sensing the alarm false probability is zero, then the probability of detection will be 1, so the availability of the idle channels $\phi_k$ could be further simplified as the following equation:
$$\begin{cases} \mathrm{Prob}(1_k = 1) = \phi_k = 1 - q_k \\ \mathrm{Prob}(1_k = 0) = 1 - \phi_k = q_k \end{cases}$$

As describe above, the contention avoidance/resolution algorithm could ease off the channel competition between each cognitive radio device during the spectrum sensing, so as to eliminate and avoid the collision.
Furthermore, the cognitive radio devices follow a channel selecting strategy using a channel selecting algorithm to select one channel as an idle channel to perform the data transmitting via a distributed selecting method. The channel selecting algorithm $\Gamma$ of the cognitive radio devices could be describe as the following equation:
$$\Gamma = \{p_1, p_2, ..., p_k\}$$

Wherein $p_1$, $p_2$,... $p_k$ indicate the choosing probability of channel 1, 2,...k by cognitive radio devices, and the sum of the probability of each idle channel is 1 ($\sum_k p_k$=1).
After getting the $\Gamma$ via appropriate designed algorithm (such as equal probability, proportional hazards and convex optimization), the channel competition could be dispersed and eased off, so as to achieve the goal that dose not need to keep a specific channel for exchanging the control information, thus solves the problem in the prior art that needs to keep a specific channel for exchanging the control information.
The proposed multichannel MAC protocol for CRs is shown in figure 3. With swift channel opportunity, transmission are initiated and terminated within one frame in avoidance of further interference with PSs. Moreover, with the cognitive functionality powered by sensing and adaption of CRs, the cognition of qk and N can be further utilized in protocol optimization (discussed in later sections). The operations of the proposed cognitive CSMA-based multichannel MAC protocol are stated as below:
(1) (Channel Selection) If CR attempts to transmit, at the beginning of a frame, the channel k is selected with probability pk.
(2) (Spectrum Sensing Phase) Perform spectrum sensing to detect the appearance of specific PS on its currently locating channel (k) and update the probabilities of PS appearance q.
(a) If PS appears, update qk and skip step (3) and (4).
(b) Else, update qk and proceeds.
(3) (CSMA-contention Phase) CR transmitter pick a backoff value between [0, $N_{cw}$], where $N_{cw}$ is the contention window size. CR transmitter decrements its backoff value by one during each idle slot. In this phase, CR keeps listening to the channel.
(a) If the channel becomes busy before the backoff value reach 0, gives up transmission.
(b) Else, sets access indicator (S = 1), access the channel.

(4) (Data transmission Phase) Transmit data. Transmission terminated before end of frame.

(a) If(S = 1), Transmit data; terminates after ACK.

(b) Else if the data is correctly received, transmits ACK.

(c) Otherwise remains silent until the end of frame.

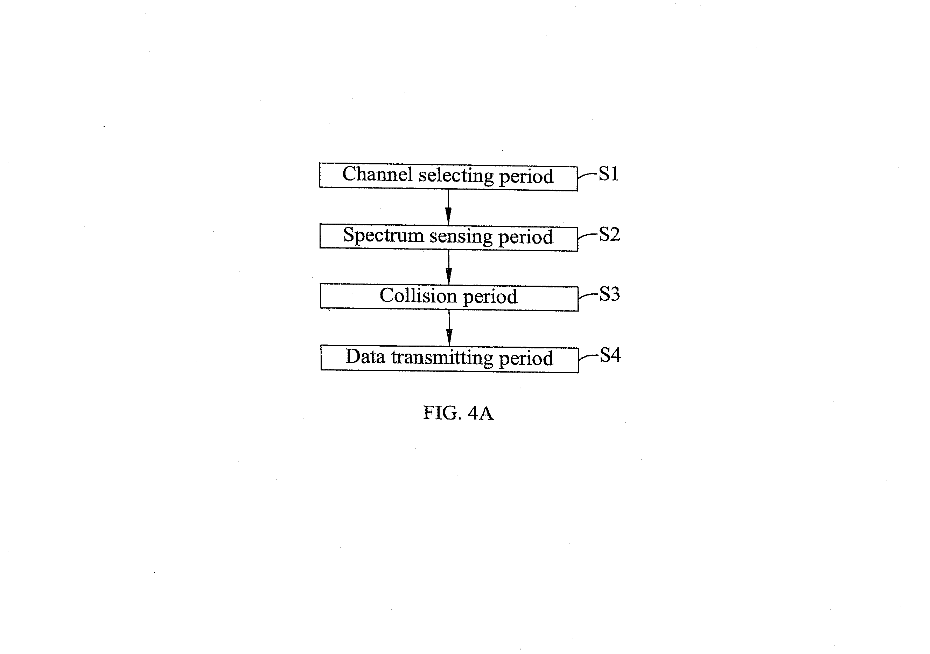

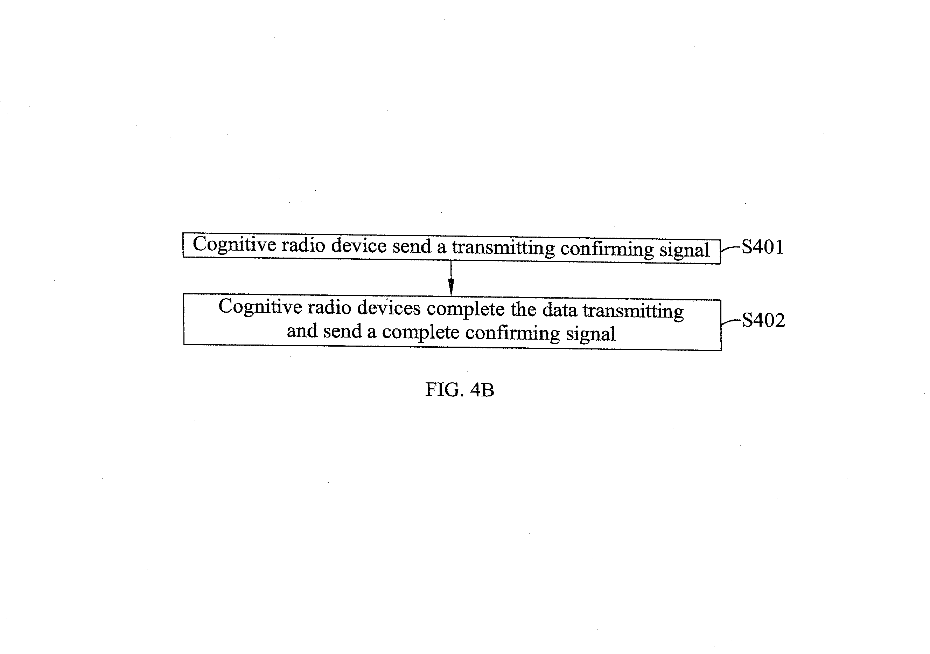

As described above, please refer to figure 4A and 4B, which are two flow charts of the spectrum sensing according to the present invention. As shown in this figure, the cognitive radio devices use the channel selecting algorithm and contention avoidance/resolution algorithm of the contention avoidance/resolution mechanism, the process mentioned above could be concluded as the following steps:

(S1) Channel selecting period: when the cognitive radio devices want to transmit data, the cognitive radio devices choose channels prepare for transmitting at the frame beginning by the channel selecting algorithm $\Gamma$ according to the information sensed;

(S2) Spectrum sensing period: perform the spectrum sensing to determine which channels are occupied by the primary systems, and update the appearance probability of the primary system. For example, when the primary systems are sensed appearing in any channel, this channel is immediately marked as a occupied channel, and then update the situation of the channels occupied by each primary system, so as to avoid the cognitive radio devices using the occupied channels;

(S3) Collision period: the cognitive radio devices choose a backoff value ranged between 0 to $N_{cw}$, and the $N_{cw}$ is the contention window size. The cognitive radio devices gradually decrease the contention window size in every idle slot period, and keep listening to all channels; when any channel is changed to a busy situation, then the backoff value is decreased to 0, and the cognitive radio devices quit transmitting data in this channel, otherwise the situation of this channel will be set allowing access, and this channel will be changed to a idle channel;

(S4) Data transmitting period: the data transmitting time of the cognitive radio device is ranged from getting the idle channel to the end of the frame in the idle channel (as shown in figure 2). During this data transmitting period, the following steps may be further performed:

(S401) the situation of the channel is set as allowing access, and this channel is changed to an idle channel. After the cognitive radio devices send a transmitting confirming signal, the cognitive radio devices could use this channel to transmit data; and

(S402) When the cognitive radio devices complete the data transmitting in the idle channels, the cognitive radio devices will send a complete confirming signal.

In the steps described above, each cognitive radio device keeps being quiet until the end of frame during the data transmitting period in the idle channels.

In order to explain the cognitive radio devices without using the spectrum sensing described above, the Markov chain and a steady-state approximation are used to simulate the process. The protocol performance is evaluated with Markov chain and a steady-state approximation to build intuition of parameter dependence for further optimization process. Supposed that that CR are synchronized with PSs and spectrum sensing is perfectly performed (i.e., if PS appears at frame t, all the CRs who tuned the channel shall detect its appearance avoid channel access.) The packet arrival of CR is assumed to follow a Poisson Process with parameter$\lambda$, and the retransmission policy is assume to follow a geometric backoff with parameter $q_r$. If CR is backlogged, with probability $q_r$ it attempts channel access to retransmit the backlogged packet. However, Markov chain model suffers from the fact there are no clear mathematically solved form. Without losing intuition of protocol analysis and the hope of finding intuition among parameters, we apply a steady-state expectation approach introduced by S. Ross, (Stochastic Process, 2nd ed. John Wiley & Sons, Inc., 1996) to analyze the protocol. To consider the potential throughput of multichannel MAC, we further analyze multichannel MAC under saturated load, controlled by Pseudo-Bayesian algorithm proposed by J. Mo, H.-S. So, and J. Walrand (Comparison of multichannel mac protocols, Mobile Computing, IEEE Transactions on, vol. 7, no. 1, pp. 50-65, Jan. 2008) and D. Bertsekas and R. Gallager (Data Networks, 2nd ed. Prentice Hall, 1992) with parameter p.

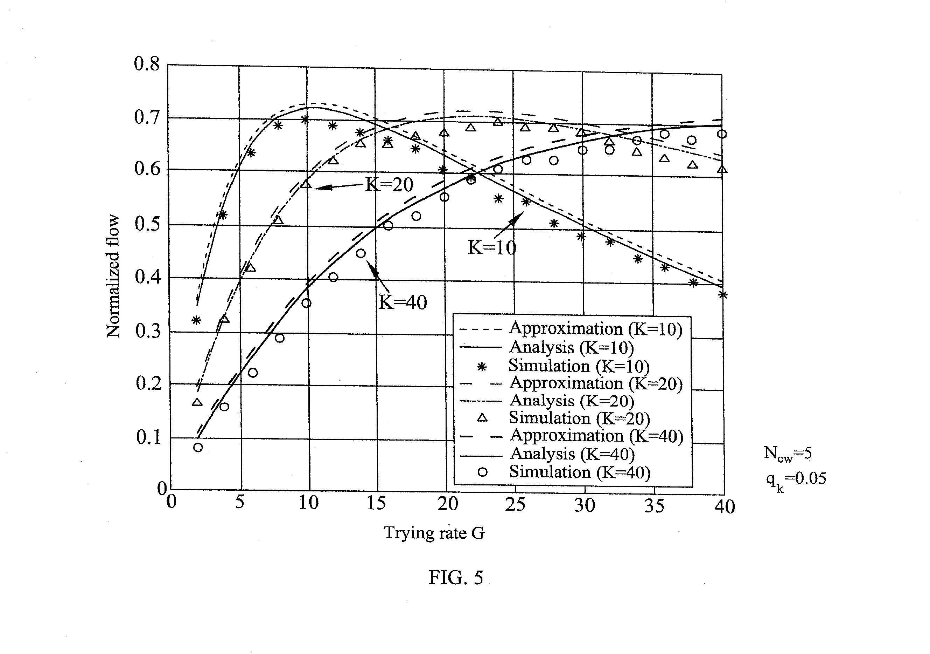

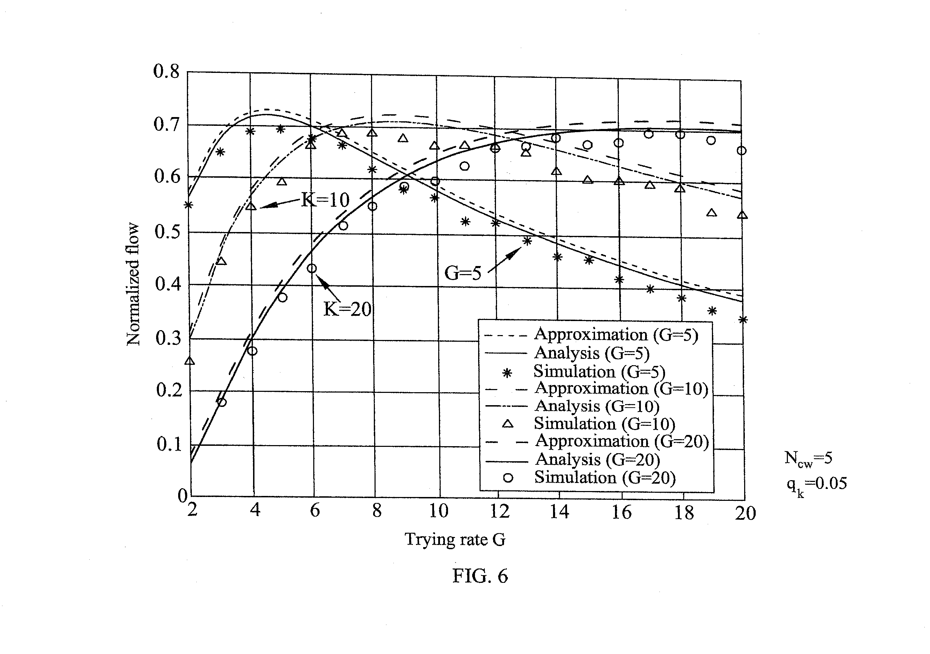

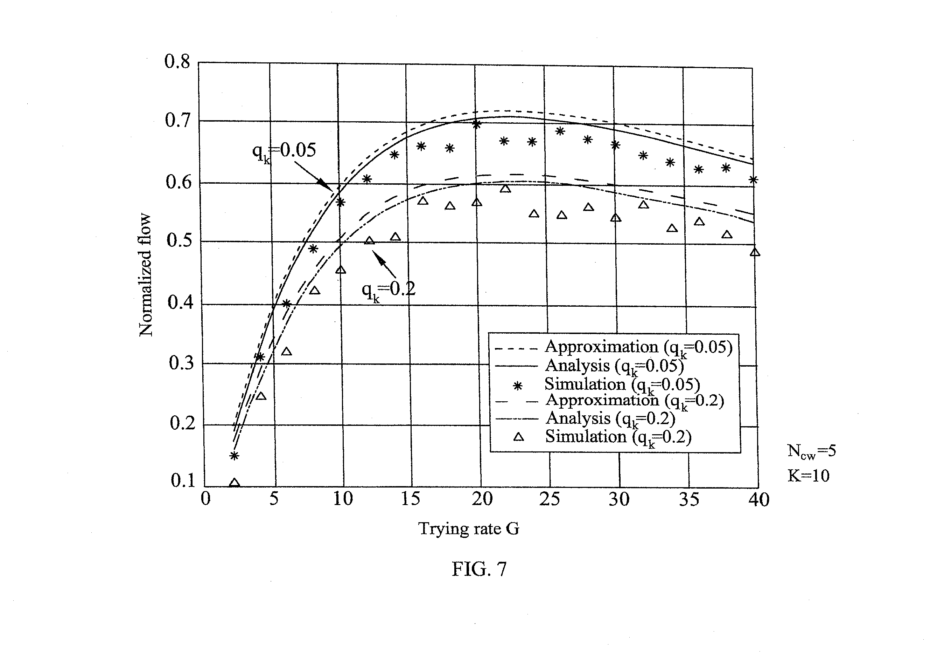

The simulation parameters includes K (amounts of the channels)=10,20,30, $\Gamma$(channel selecting strategy)= {1/$K$}, $\eta$(operating efficiency of multichannel frame)=0.95, $N_{cw}$(backoff value)=5, qr=0.2, $q_k$=0.05. Please refer to figures 5~7, the flow rate decreases with the amounts of channels, and the trying transmitting rate will raise as shown in figure 5. From figure 6 it can be observed that different trying transmitting rates correspond to different amounts of channels. Meanwhile, the trying transmitting rate is not stable with different $q_k$ as shown in figure 7.

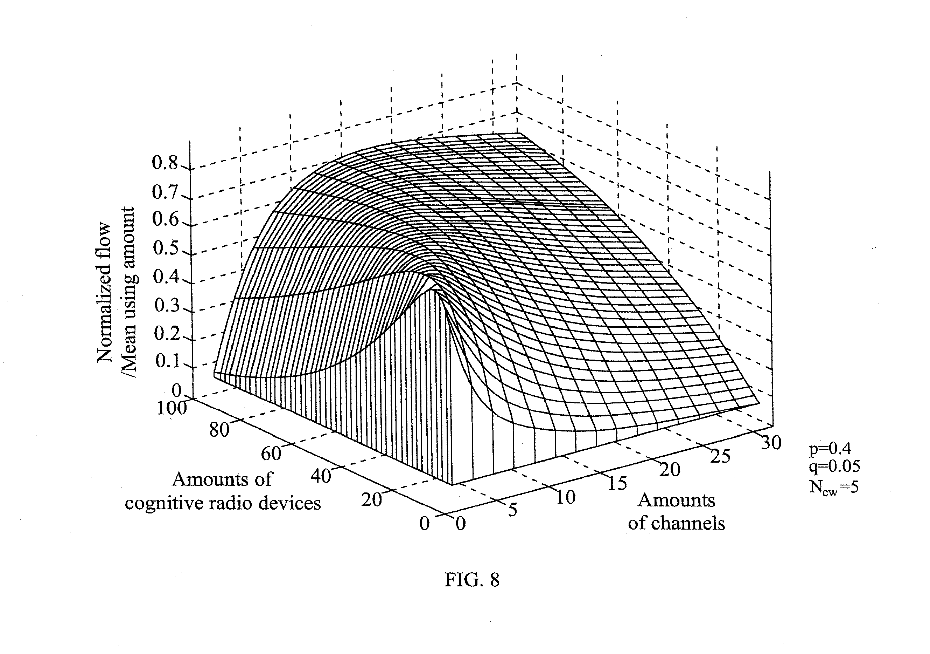

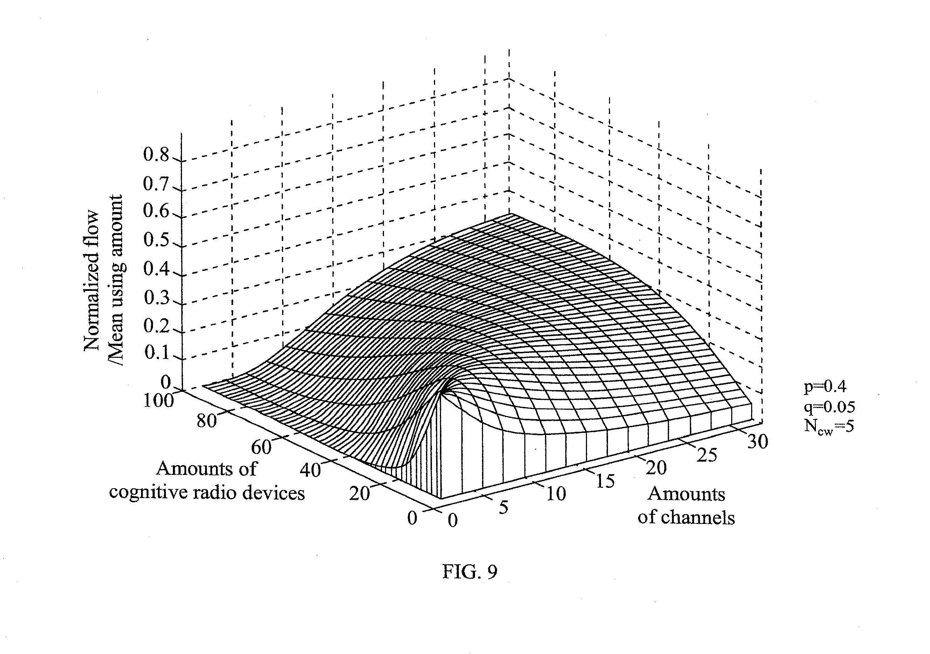

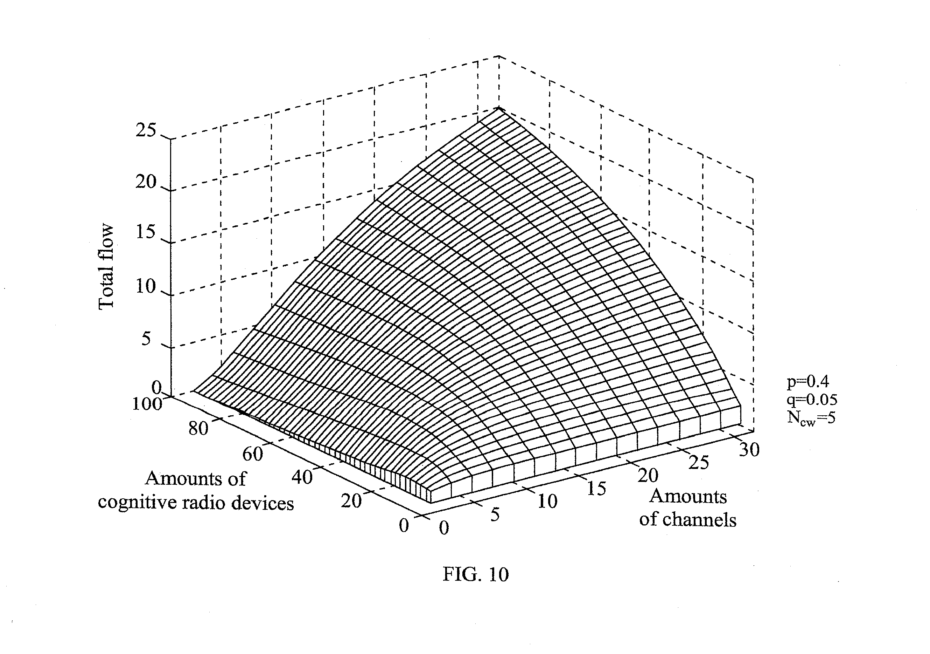

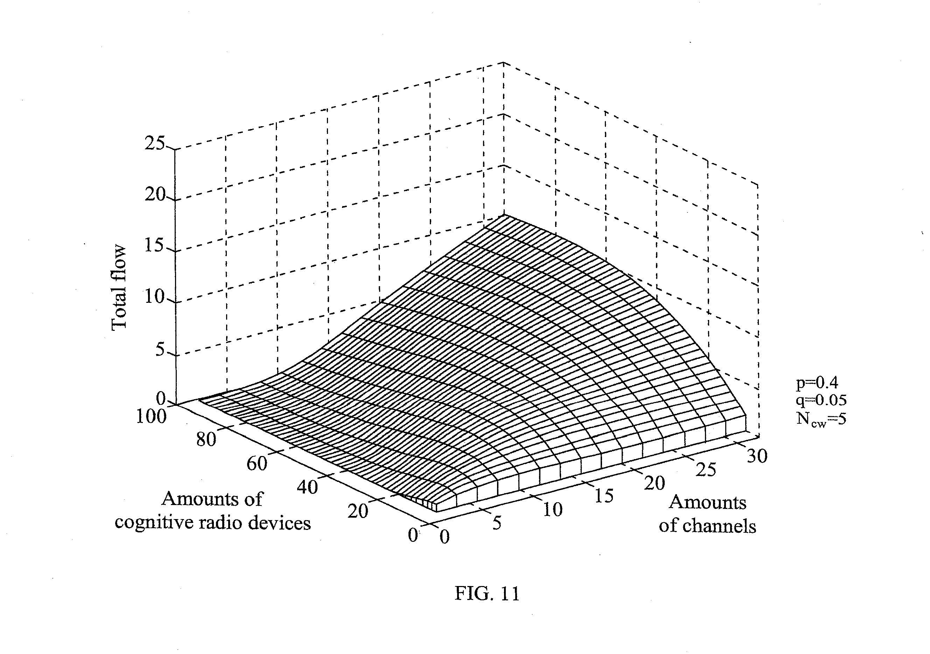

However, if every cognitive radio device uses the spectrum sensing as mentioned above, then from figure 8~9 which is the result of simulation by Markov chain and steady-state approximation, it can be observed that the primary system and each cognitive radio device could effectively ease off the channel competition. Further, as shown in figure 10~11, the flow rate of the channel increase with the amounts of the channels.

As described above, each cognitive radio device could dynamically choose an idle channel via the spectrum sensing, and then the data can be transmitted through the idle channel to the backbone network, so as to improve the channel using efficiency of the networks.

While particular embodiments of the present invention have been shown and described, it will be obvious to those skilled in the art that, based upon the teachings herein, changes and modifications may be made without departing from this invention and its broader aspects. Therefore, the appended claims are intended to encompass within their scope of all such changes and modifications as are within the true spirit and scope of the exemplary embodiment(s) of the present invention.

**Claims**

1. A method of multichannel media access control of a cognitive radio applicable to a fully-distributed ad-hoc network, the network including a plurality of primary systems ($PS_1$, $PS_2$,...,$PS_k$) and a plurality of cognitive radio devices ($CR_1$, $CR_2$,..., $CR_N$), the method comprising:

   executing a transmitting control and data transmitting in a plurality of channel (channel 1, channel 2, ...) by each primary system ($PS_1$, $PS_2$,...,$PS_k$) and each cognitive radio device ($CR_1$, $CR_2$, ..., $CR_N$);
   occupying any one of the channels (channel 1, channel 2, ..., channel K) with priority to perform the transmitting control and data transmitting by any one of the primary system ($PS_1$, $PS_2$,...,$PS_k$) which wants to perform the transmitting control and data transmitting; and
   getting the channels occupied by any one of the primary systems ($PS_1$, $PS_2$,...,$PS_k$) or any one of the cognitive radio devices ($CR_1$, $CR_2$, ..., $CR_N$) via a spectrum sensing by each cognitive radio device ($CR_1$, $CR_2$, ..., $CR_N$), and
   choosing at least one channel which is unoccupied from the channels (channel 1, channel 2, ..., channel K) via a contention avoidance/resolution mechanism as an idle channel and then executing the data transmitting.

2. The method of claim 1, wherein the contention avoidance/resolution mechanism further comprises a channel selecting strategy, and the cognitive radio device ($CR_1$, $CR_2$, ..., $CR_N$) follows the channel selecting strategy to select the idle channel from the beginning duration of transmitting a frame of a packet by the cognitive radio device ($CR_1$, $CR_2$, ..., $CR_N$);
the cognitive radio device ($CR_1$, $CR_2$, ..., $CR_N$) performs the spectrum sensing to avoid the transmitting performed by the primary systems ($PS_1$, $PS_2$,...,$PS_k$) after the idle channel being selected; and
the cognitive radio device ($CR_1$, $CR_2$, ..., $CR_N$) performs the packet transmitting after performing the contention avoidance/resolution for the primary system ($PS_1$, $PS_2$,...,$PS_k$).

3. The method of claim 1 or 2, wherein the cognitive radio devices ($CR_1$, $CR_2$, ..., $CR_N$) finish the data transmitting during the period of the frame in the idle channel.

4. The method of one of claims 1 to 3, wherein the contention avoidance/resolution mechanism comprises at least one spectrum sensing to get the situation of the channels occupied by the primary systems ($PS_1$, $PS_2$,...,$PS_k$) and the cognitive radio devices ($CR_1$, $CR_2$, ..., $CR_N$).

5. The method of claim 4, wherein the contention avoidance/resolution mechanism further comprises a step of using the spectrum sensing to get the situation of the channels occupied by each cognitive radio device ($CR_1$, $CR_2$, ..., $CR_N$).

6. The method of claim 5, wherein the contention avoidance/resolution mechanism eliminates and avoids the collision of data transmitting between the primary systems ($PS_1$, $PS_2$,...,$PS_k$) and the cognitive radio devices ($CR_1$, $CR_2$, ..., $CR_N$) via a collision eliminating algorithm and a collision avoidance algorithm.

7. The method of claim 6, wherein the collision eliminating algorithm and the collision avoidance algorithm further use the spectrum sensing to mark the channels occupied by the primary systems ($PS_1$, $PS_2$,...,$PS_k$) or mark the channels unoccupied by the primary systems ($PS_1$, $PS_2$,...,$PS_k$).

8. The method of claim 7, wherein the collision eliminating algorithm and the collision avoidance algorithm further use the spectrum sensing to mark the idle channels which can be used by the cognitive radio devices ($CR_1$, $CR_2$, ..., $CR_N$).

9. The method of claim 4, wherein the channel selecting strategy of the cognitive radio devices ($CR_1$, $CR_2$, ..., $CR_N$) is using a channel selecting algorithm to choose a channel from each channel (channel 1, channel 2, ..., channel K) via a distributed selecting method as the idle channel for the data transmitting.

**10.** The method of claim 9, wherein the contention avoidance/resolution mechanism comprises a channel selecting period, and during the channel selecting period, each cognitive radio device ($CR_1$, $CR_2$, ..., $CR_N$) uses the channel selecting algorithm at the beginning of the frame to choose the idle channel for performing transmitting.

**11.** The method of claim 9, wherein the contention avoidance/resolution mechanism comprises a spectrum sensing period, and during the spectrum sensing period, the spectrum sensing is performed to determine the present channel occupied by the primary systems ($PS_1$, $PS_2$,...,$PS_k$), and the appearance probability of the primary systems ($PS_1$, $PS_2$,...,$PS_k$) are updated.

**12.** The method of claim 9, wherein the contention avoidance/resolution mechanism comprises a collision period, and during the collision period, the cognitive radio devices ($CR_1$, $CR_2$,..., $CR_N$) choose a backoff value ranged between 0 to $N_{cw}$ (contention window size, a natural number), and the cognitive radio devices ($CR_1$, $CR_2$, ..., $CR_N$) gradually decrease the contention window size in every slot period and keep listening all channels (channel 1, channel 2, ..., channel K);
the backoff value is decreased to zero when any channel (channel 1, channel 2, ..., channel K) is judged being changed to a busy situation, and the data transmitting is given up in this channel (channel 1, channel 2, ..., channel K) having the busy situation; and
when any channel (channel 1, channel 2, ..., channel K) is judged not being set to the busy situation, the channel (channel 1, channel 2, ..., channel K) is set as the idle channel.

**13.** The method of claim 9, wherein the contention avoidance/resolution mechanism comprises a data transmitting period, and during the data transmitting period, the data transmitting time of the cognitive radio device ($CR_1$, $CR_2$, ..., $CR_N$) is ranged from getting the idle channel to the end of the frame in the idle channel.

**14.** The method of claim 13, wherein the data transmitting period further comprises:

when any one of the channels (channel 1, channel 2, ..., channel K) is changed to the idle channel, the cognitive radio device ($CR_1$, $CR_2$, ..., $CR_N$) send a transmitting confirming signal, and then the cognitive radio device ($CR_1$, $CR_2$, ..., $CR_N$) could use this channel to transmit data;
when the cognitive radio devices ($CR_1$, $CR_2$, ..., $CR_N$) complete the data transmitting in the idle channels, the cognitive radio devices ($CR_1$, $CR_2$, ..., $CR_N$) then send a complete confirming signal; and
each cognitive radio device ($CR_1$, $CR_2$, ..., $CR_N$) keeps being quiet until the end of frame during the data transmitting period in the idle channels.

FIG. 1

Channel selection

| SS | CSMA | DATA |

Spectrum sensing — Collision control — Data transmitting

FIG. 2

FIG. 3

EP 2 369 755 A2

EP 2 369 755 A2

```
┌─────────────────────────────┐
│  Channel selecting period   │──S1
└─────────────────────────────┘
              │
              ▼
┌─────────────────────────────┐
│  Spectrum sensing period    │──S2
└─────────────────────────────┘
              │
              ▼
┌─────────────────────────────┐
│     Collision period        │──S3
└─────────────────────────────┘
              │
              ▼
┌─────────────────────────────┐
│  Data transmitting period   │──S4
└─────────────────────────────┘
```

FIG. 4A

Cognitive radio device send a transmitting confirming signal — S401

Cognitive radio devices complete the data transmitting
and send a complete confirming signal — S402

FIG. 4B

FIG. 5

FIG. 6

FIG. 7

FIG. 8

$p=0.4$
$q=0.05$
$N_{cw}=5$

Amounts
of channels

Amounts of
cognitive radio devices

Normalized flow
/Mean using amount

FIG. 9

FIG. 10

p=0.4
q=0.05
$N_{cw}=5$

Amounts
of channels

Amounts of
cognitive radio devices

Total flow

p=0.4
q=0.05
$N_{cw}$=5

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. ROSS.** Stochastic Process. John Wiley & Sons, Inc, 1996
- **J. MO ; H.-S. SO ; J. WALRAND.** Comparison of multichannel mac protocols, Mobile Computing. *IEEE Transactions,* January 2008, vol. 7 (1), 50-65
- **D. BERTSEKAS ; R. GALLAGER.** Data Networks. Prentice Hall, 1992